# EUROPEAN PATENT SPECIFICATION

(11) **EP 2 105 334 B1**
(45) Date of publication and mention of the grant of the patent: **29.09.2010**
(21) Application number: 08153625.2
(22) Date of filing: 28.03.2008
(51) Int. Cl.: B60J 7/22

(54) **Air deflector**
Luftablenker
Déflecteur d'air

(43) Date of publication of application: 30.09.2009
(73) Proprietor: Ford Global Technologies, LLC, Dearborn, MI 48126 (US)
(72) Inventor: Kårhag, Ann-Charlotte, 43376, Jonsered (SE); Guldstrand, Peter, 438 92, Härryda (SE)
(74) Representative: Bergquist, Kjell Gunnar

(56) References cited:
- DE-A1- 10 156 019
- DE-A1- 19 732 699
- DE-C- 588 549

## Description

### TECHNICAL FIELD

The present invention relates to an air deflector adapted to direct wind from the back seat area of a convertible passenger car. The air deflector is especially useful when passengers are riding in the back seat of the vehicle.

### BACKGROUND ART

In convertible cars, both the ones with a removable top and with a retractable or foldable top, there will be a more or less turbulent wind flow in the passenger compartment when driving with the top removed or down, i.e. with the car open. The amount of wind flow is dependent on the speed of the vehicle.

Different measures have been taken to reduce the wind drag for the driver and passenger in the front seats of an open car. One common measure is to apply a windblocker behind the front seats, extending up to the region of the head of the driver and passenger. The windblocker effectively reduces turbulence for the front seat occupants when driving with the top down, improving the comfort for the driver and passenger.

A windblocker of this kind may comprise one or more pieces and may be either removable or fixed in the vehicle. Different materials have been proposed, e.g. plastic, glass and fabric. These solutions work well for cars having just two front seats or for cars where only the front seats are occupied. They give no improvement for passengers in the back seats.

When driving in moderate speeds with the top down, e.g. on a main road, the side windows may be down which will give quite a lot of turbulence around the driver compartment. This will at the same time reduce the direct wind flow on the passengers in the rear seats. When driving at higher speeds, e.g. on a motorway, the side windows are often raised in order to reduce wind turbulence and wind noise. In this case, there will be quite a lot of turbulence in the back seat, especially in the region where the passengers have their heads. This will both give a passenger wind draft in the face and induce noise in the ears. The document DE19732699 A1 describes a fixed air deffector according to the preamble of claim 1.
There is thus room to improve the comfort in the back seat of an open car.

### DISCLOSURE OF INVENTION

An object of the invention is therefore to provide an air deflector for a convertible car that directs the wind flow from the rear seat. A further object of the invention is to provide an air deflector that is easy to fasten and to remove.

The solution to this problem according to the invention is described in the characterizing part of claim 1 regarding the air deflector. The other claims contain advantageous embodiments and further developments of the air deflector according to the invention.

With an air deflector, adapted to be attached to the upper windshield crossbeam of a convertible vehicle, comprising a top surface having a front portion, an outer side portion, an inner side portion and a rear wing portion, where the rear wing portion extends upwards from the top surface, the object of the invention is achieved in that the air deflector comprises a locking device adapted to lock the air deflector in the locking arrangement for the retractable top.

By this first embodiment of the air deflector according to the invention, an air deflector is provided, which increases the comfort of the rear passengers in an open car. In the first embodiment, an air deflector that can be mounted to an open vehicle is provided. The air deflector will direct the wind, which would otherwise flow down in the rear seat region of the open vehicle, over the rear seat region. This will reduce the wind drag for the passengers that ride in the rear seats. The air deflector can be produced to fit any existing open vehicle by adapting the shape of the air deflector to the vehicle. The existing locking assembly of the existing vehicle is used to fasten the air deflector to the vehicle. Thus, no modifications on the vehicle are necessary. The air deflector can thus be produced as an after-market accessory.

In an advantageous development of the air deflector according to the invention, the outer side portion extends downwards from the top surface. This allows the air deflector to overlap the side window of the vehicle, which will reduce the wind flow to the rear seat section and which will also reduce the noise induced. By closing the gap between the air deflector and the side window, a advantageous flow pattern is achieved.

In an advantageous further development of the actuator according to the invention, the rotational motion of the driving device is transferred into a linear motion, so that the movable element is moved in a linear manner. This allows for a cheap and cost-effective solution.

In an advantageous further development of the air deflector according to the invention, the top surface of the air deflector is convex. This allows the air deflector to follow the shape of the removable or retractable top. The advantage of this is that the styling may be enhanced and that the flow pattern of the air deflector will follow the shape of the vehicle.

In an advantageous further development of the air deflector according to the invention, the air deflector is made from a plastic material. The plastic material is advantageously rigid. By using a clear plastic material, the air deflector will be less noticeable when in use. A plastic material is cheap and easy to form in any desired shape.

In an advantageous further development of the air deflector according to the invention, the front portion and the rear wing portion of the air deflector are connected to each other by a plurality of struts. By using struts to connect the front and rear portions of the air deflector, a foldable air deflector is obtainable. The advantage of this is that a foldable air deflector is easier to store in the vehicle.

In an advantageous further development of the air deflector according to the invention, the struts are foldable. The advantage of this is that a more compact foldable air deflector is obtained, which makes it even easier to store in the vehicle.

In an advantageous further development of the air deflector according to the invention, the midportion between the front portion and the rear wing portion consists of a flexible material. The flexible material may be a woven fabric. The advantage of this is that the foldable air deflector is improved.

In an advantageous further development of the air deflector according to the invention, the shape of the air deflector is substantially rectangular. The advantage of this is that an advantageous flow pattern of the air deflector is obtained.

In an advantageous further development of the air deflector according to the invention, the shape of the air deflector is triangular, with the inner side portion and the rear wing portion united. The united inner side portion and rear wing portion may form a continuous convex shape. The advantage of this is that the flow pattern of the air deflector may be improved.

In an advantageous further development of the air deflector according to the invention, the wing shape of the rear wing portion extends into the inner side portion. The advantage of this is that the flow pattern of the air deflector may be further improved.

In an advantageous open vehicle according to the invention, the vehicle comprises at least one inventive air deflector. This provides for a comfortable ride for the rear seat passengers.

In an advantageous further development of the vehicle according to the invention, the vehicle comprises a sensor that indicates that the air deflector is attached to the vehicle. This allows for an enhanced safety of the vehicle.

In an advantageous further development of the vehicle according to the invention, the vehicle comprises a function that disables the raising of the retractable top when an air deflector is attached to the vehicle. This allows for an enhanced safety of the vehicle.

### BRIEF DESCRIPTION OF DRAWINGS

The invention will be described in greater detail in the following, with reference to the embodiments that are shown in the attached drawings, in which
- Fig. 1: shows a perspective view of a convertible car with an air deflector according to the invention,
- Fig. 2: shows a perspective view of an air deflector according to the invention,
- Fig. 3: shows a front view of the locking device for the air deflector according to the invention,
- Fig. 4: shows a rear view of the locking device for the air deflector according to the invention, and
- Fig. 5: shows a second embodiment of an air deflector according to the invention.

### MODES FOR CARRYING OUT THE INVENTION

The embodiments of the invention with further developments described in the following are to be regarded only as examples and are in no way to limit the scope of the protection provided by the patent claims. The air deflector described below is adapted to be mounted on the left side of the vehicle, seen in the driving direction of the vehicle. Thus, only the left side of the car is described. A similar, but mirror-inverted, air deflector adapted to be mounted on the right side of the vehicle is likewise comprised in the description. In the examples below, the vehicle is a left-hand drive car.

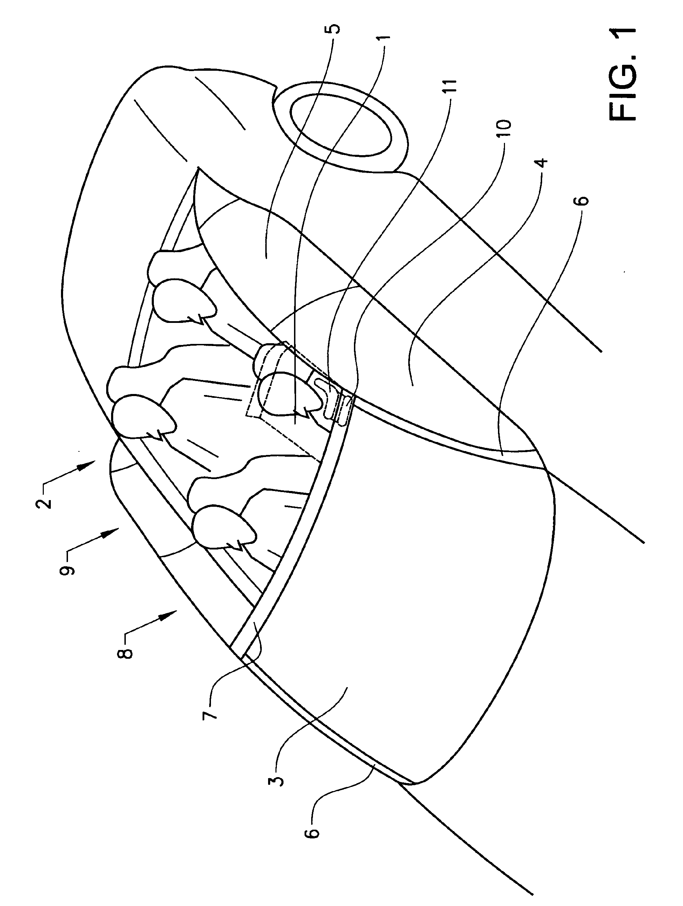

Fig. 1 shows an example of a convertible vehicle 2 with the top down. The vehicle comprises a front windshield 3 and side windows, both a front side window 4 and a rear side window 5. The windshield is delimited by the A-pillars 6 and an upper front crossbeam 7. The coup6 of the vehicle comprises a front section 8 in which the driver and passenger seats are located, and a rear section 9 in which the rear seats are located. In the crossbeam 7, at least two locking arrangements 10 are located. There is one locking arrangement positioned in the region close to each A-pillar. The locking arrangements 10 are used to lock the retractable top to the crossbeam when it is in the raised positioned. The locking arrangements 10 may comprise a sensor that detects if the top is in place and if the locking arrangement is in the locked position. In this way, it can be ensured that the retractable top is in position and is locked in a proper way.

The vehicle in Fig. 1 also comprises an inventive air deflector 1. The air deflector is positioned at the corner between the crossbar 7 and the front side window 4. The air deflector comprises a locking device 11 that is adapted to cooperate with the locking arrangement 10 in order to attach the air deflector to the vehicle.

The front portion 12 of the air deflector is shaped in the same way as the upper cross beam of the vehicle. In this way, the shape of the air deflector will follow the shape of the vehicle when the air deflector is mounted to the vehicle. This will improve the appearance of the air deflector and will reduce wind noise. Sideways, the air deflector will extend over less than half of the crossbeam when it is mounted to the vehicle. Preferably, the air deflector extends over a distance of between a fourth and a third of the width of the windshield crossbeam.

The outer side portion 13 of the air deflector extends rearwards from the front portion for at least a third of the length of the front side window 4 when the air deflector is mounted at the vehicle. Preferably, the air deflector extends over between a third and the whole of the front side window. In this way, the air deflector will cover part of the front section of the driving compartment. The rear wing portion 14 of the air deflector comprises a wing shape that extends upwards from the top surface 16 of the air deflector. The wing shape will guide the wind upwards so that the wind does not blow down into the rear seat section of the vehicle.

The shape of the top surface of the air deflector will, due to design purposes, preferably resemble the shape of the retractable top for the same position. Other shapes are also conceivable. Thus, the top surface of the air deflector is in this example slightly bent in a convex manner, substantially following the curvature of the upper edge of the side window. This will give a smooth transition from the shape of the windshield to the air deflector.

The outer side portion of the air deflector extends to and follows the upper edge of the side window. The outer side portion extends in this example over the side window edge when seen from above of the vehicle and also extends at least down to the edge of the side window in a vertical direction.

Preferably, the outer side portion extends a distance further down over the side window, covering the upper edge of the side window. The outer side portion of the air deflector can have the same shape and curvature as the side of the retractable top. By letting the air deflector extend down over the edge of the side window, the gap between the air deflector and the side window will be closed. This will reduce the wind flow to the rear seat section of the vehicle and will also reduce the noise created by the wind. The edge of the outer side portion may also be provided with a sealing so that the air deflector can bear on the side window and so that an air tight joint is obtained.

If the outer side portion of the air deflector has the same shape and curvature as the side of the retractable top, i.e. the air deflector follows the curvature of the side window, the outer side portion will extend down over the side window. Since the side window of a convertible car does not have a window frame, the window itself will bear on the retractable top when it is raised. In order to create a leakage free connection between the top and the side window, it is possible to let the window enter a groove in the retractable top. In this way, a tight fit is achieved. With the window in the groove, it will however be impossible to open the door. This is solved by dropping the window slightly before the door is opened, clearing the window from the groove. The same mechanism is used when the outer side portion of the air deflector extends down over the side window and the door is to be opened.

If the vehicle is not equipped with a window that retracts somewhat when the door is opened, the air deflector should not extend down over the side window. In this case, the air deflector may extend almost down to the same height as the side window, or may extend down under the upper side of the window but on the inside of the window.

The rear wing portion 15 is located at the rear end of the air deflector. The height of the wing shape depends on e.g. the length of the air deflector, the curvature of the top surface of the air deflector and on the length of the coupé, i.e. the position of the passenger compartment in relation to the air deflector. The wing shape may have the same height over the complete width of the air deflector, or may have a different height over the width. The wing shape may e.g. be as high as the top surface at the outer side portion and rise from there, having its greatest height at the inner side portion.

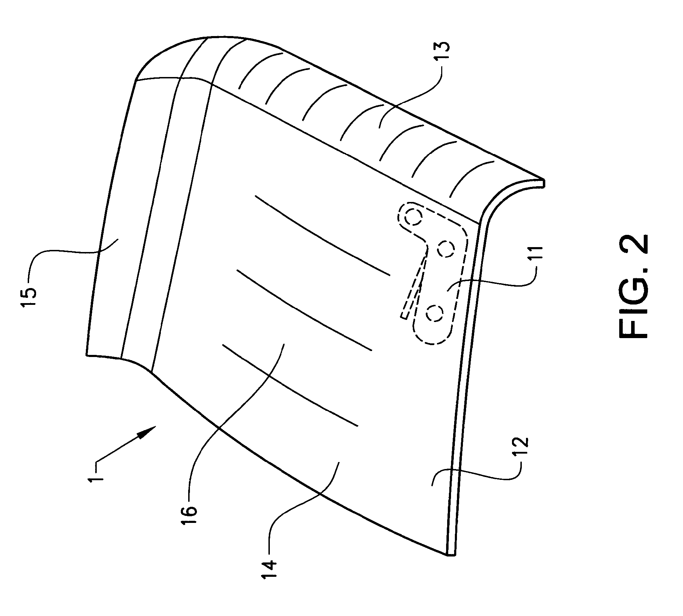

The shape of the air deflector, as seen from above, may be approximately rectangular, may have a somewhat triangular delta-shape, or may have a shape in between the two. The shape of the front portion is decided by the shape of the windshield of the vehicle. The shape of the outer side portion is decided by the shape of the side window. However, the shape of the inner side portion and the rear wing portion may be varied. In the first example, the inner side portion 14 is roughly parallel to the outer side portion 13 and the rear wing portion 15 is roughly parallel to the front side portion 12, as seen in Fig. 2.

In a further example, the shape of the air deflector, as seen from above, may be approximately triangular. In this example, the inner side portion and the rear wing portion both form a continuous convex shape. The wing shape may in this example extend more or less to the front portion and may have a varying height. The air deflector shape may be more or less triangular, i.e. the angle between the inner side portion and the rear wing portion may vary between zero degrees, giving a straight edge, and 90 degrees, giving a rectangular shape. Also the position where the two portions join may be freely varied. The exact shape of the air deflector and the shape of the wing is preferably decided by simulations or by wind tunnel tests.

The air deflector may be manufactured in a plastic material. In one preferred embodiment, the air deflector is made form a clear and rigid plastic. It is of advantage that the air deflector will not bend due to the wind when the vehicle is driven, regardless of the speed. However, the air deflector may bend some at high speeds, since normally a convertible car is not driven at excessive speeds but at a comfortable cruising speed. Important is that the air deflector does not start to self-oscillate. This will induce noise and may weaken the air deflector. Since the air deflector is only attached to the vehicle at the front edge of the air deflector, the front portion must be rigid.

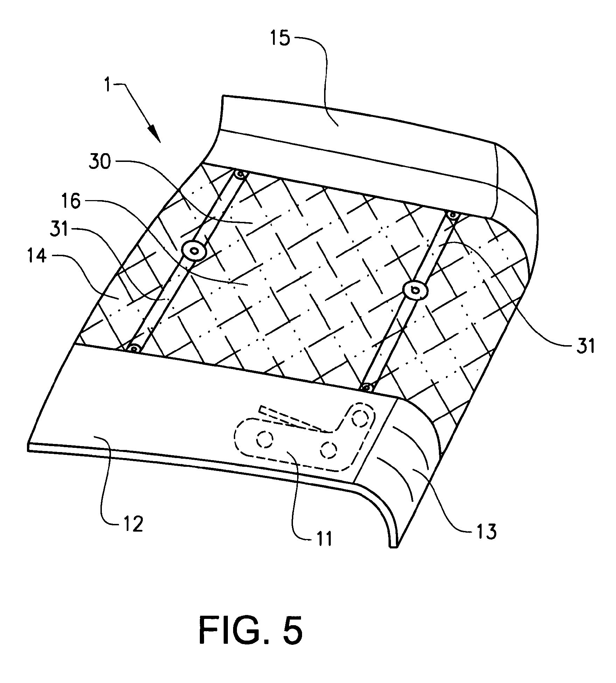

In a further embodiment, the air deflector is foldable. Such an air deflector is shown in Fig. 5 and comprises a rigid front portion 12, a rigid rear wing portion 15 and a flexible mid section 30. The front and rear sections are interconnected with one or more struts 31, allowing the air deflector to be locked in an extended position. There are different ways to connect the front portion to the rear portion. In one example, the struts are rigid and fastened in the front and rear portion in a pivoting way. In this example, the air deflector folds sideways. With foldable struts, e.g. by also providing a hinge in the middle of each strut, the air deflector will fold with the front and rear portion next to each other. Removable struts, telescopic struts and the like are also conceivable. It is important that the folding and unfolding of the air deflector is easy and safe and that the extended air deflector is stable so that it is not deformed by the air flow. By providing a foldable air deflector, the storage of the air deflector will be facilitated.

The mid section may comprise a fabric that is more or less windproof. The purpose of the air deflector is to guide the wind, and thus a fabric that is not completely windproof can be used. Thus, different woven mesh materials may be suitable. A foldable air deflector is easier to store in the vehicle when not in use. The fabric may cover the complete air deflector. By using a fabric with the same colour as the vehicle, a pleasant design solution is reached.

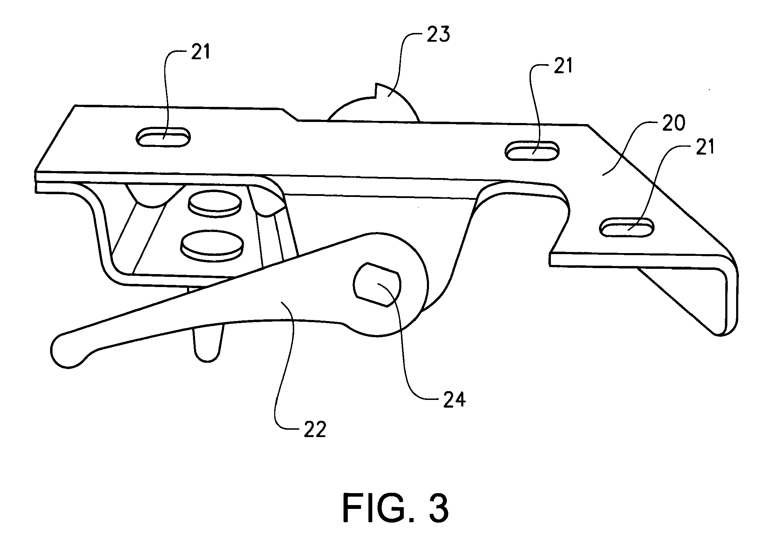

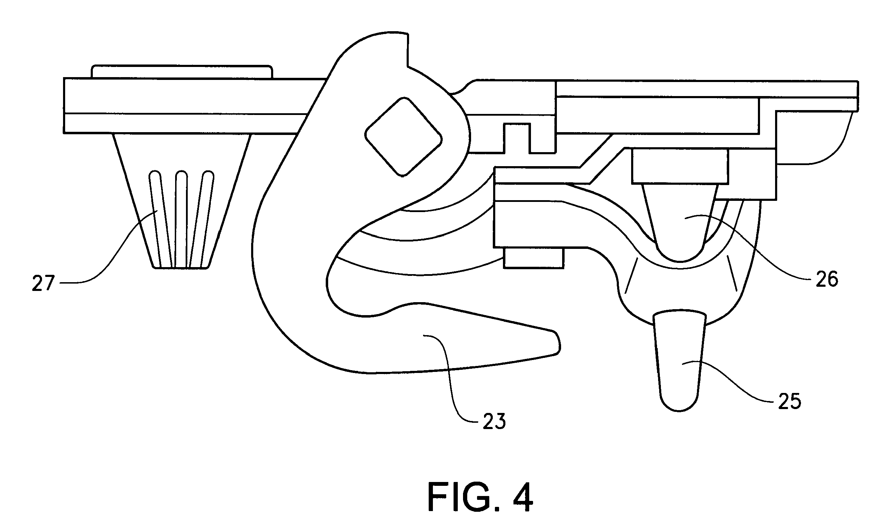

The locking device 11, shown in Figures 3 and 4, is fixed to the air deflector at the front portion of the air deflector. The locking device may be fixed to the air deflector with an appropriate means, e.g. glue, screws, rivets, etc. It is possible to integrate a reinforcement means in the air deflector in order to stabilize the mounting of the locking device. The reinforcement may e.g. be a metallic part that at the same time can be used as a design element in the air deflector. The locking device comprises means to enable a quick and easy mounting and dismounting of the air deflector to the vehicle.

The locking device comprises a lock body 20, a first pin and a second pin and a hook with a lever. The first and second pin will fit the openings of the locking arrangements in the crossbeam, where the retractable top locks in. When the pins are inserted in the openings, the lever can be turned which will engage the hook with a locking pin of the locking arrangement. This will secure the air deflector to the vehicle. The locking device may comprise a further pin in order to reduce the play of the locking device when it is attached to the vehicle.

The locking device comprises a lock body 20 having a plurality of mounting openings 21. The mounting openings 21 are used to fixate the locking device 11 to the air deflector when the locking device is fixated with mounting means such as screws or rivets. The mounting openings 21 may also cooperate with protruding elements of the air deflector when the locking device is fixated with glue. This will on the one hand help with the positioning of the locking device and on the other hand help to take up rotary forces acting on the glue joint. The locking device further comprises a lever arm 22 and a locking hook 23 interconnected with an axle 24 journalled in the lock body. The lock body comprises a first locating dowel pin 25 and a second locating dowel pin 26. The first locating dowel pin 25 and the second locating dowel pin 26 are adapted to interact with corresponding openings in the locking arrangement of the vehicle. One or both of the locating dowel pins may have a somewhat pointed shape, which will help to reduce tolerances of the system and therefore to allow for a secure fastening of the locking device to the locking arrangement. The lock body may further comprise a resilient element 27, which will be somewhat compressed when the air deflector is attached to the vehicle. The resilient element 27 will compensate for tolerances in the system and will help to stabilise the mounted air deflector.

The air deflector is attached to the vehicle in the following way. The air deflector is held in position at the left corner, where the windshield and the side window meet. The locating dowel pins are introduced into the openings of the locking arrangement and the air deflector is firmly pressed downwards so that the air deflector is properly positioned in the locking arrangement. The lever arm is thereafter turned so that the locking hook engages with a corresponding locking pin in the locking arrangement. The lever arm is turned completely to the end stop of the locking device. During the turning of the lever arm, the resilient element is compressed somewhat which will take up tolerances in the locking system and thus allows for a play free attachment of the air deflector to the vehicle. The resilient element will stabilize the air deflector during use.

The locking arrangement may comprise a sensor (not shown) that detects if a locking device is mounted in the locking arrangement. The vehicle may further comprise a sensor (not shown) that detects if the retractable top is down. The control system of the vehicle may in this case comprise a function that detects if an air deflector is mounted in the locking arrangement. This is done by sensing that the top is down and that something is still mounted in the locking arrangement. This can be used to prohibit that the top is raised when an air deflector is in use. The locking arrangement may further comprise a sensor that detects if the lever arm is turned to the end stop. If the lever arm is not turned sufficiently, a warning signal may be given.

The invention is not to be regarded as being limited to the embodiments described above, a number of additional variants and modifications being possible within the scope of the subsequent patent claims.

### REFERENCE SIGNS

- 1 :: Air deflector
- 2:: Vehicle
- 3:: Front windshield
- 4:: Front side window
- 5:: Rear side window
- 6:: A-pillars
- 7:: Upper front crossbeam
- 8:: Front section
- 9:: Rear section
- 10:: Locking arrangement
- 11:: Locking device
- 12:: Front portion
- 13:: Outer side portion
- 14:: Inner side portion
- 15:: Rear wing portion
- 16:: Top surface
- 17:: Front edge
- 18::
- 19::
- 20:: Lock body
- 21:: Mounting opening
- 22:: Lever arm
- 23:: Locking hook
- 24:: Axle
- 25:: First locating dowel pin
- 26:: First locating dowel pin
- 27:: Resilient element
- 28::
- 29::
- 30:: Flexible mid portion
- 31:: Strut

## Claims

1. Air deflector (1), adapted to be attached to the upper windshield crossbeam (7) of a convertible vehicle (2), comprising a top surface (16) having a front portion (12), an outer side portion (13), an inner side portion (14) and a rear wing portion (15), where the rear wing portion (15) extends upwards from the top surface (16),
**characterized in that** the air deflector comprises a locking device (11) adapted to lock the air deflector in the locking arrangement (10) for the retractable top.

2. Air deflector according to claim 1, **characterized in that** the outer side portion (13) extends downwards from the top surface (15).

3. Air deflector according to claim 1 or 2, **characterized in that** the top surface (15) is convex.

4. Air deflector according to any of the preceding claims,
**characterized in that** the air deflector is made from a plastic material.

5. Air deflector according to any of the preceding claims,
**characterized in that** the front portion (12) and the rear wing portion (15) are connected to each other by a plurality of struts (31).

6. Air deflector according to claim 5, **characterized in that** the struts (31) are foldable.

7. Air deflector according to claims 5 or 6, **characterized in that** the midportion (30) between the front portion (12) and the rear wing portion (15) consists of a flexible material.

8. Air deflector according to claim 7, **characterized in that** the flexible material is a woven fabric.

9. Air deflector according to any of the preceding claims,
**characterized in that** the shape of the air deflector is substantially rectangular.

10. Air deflector according to any of claims 1 to 8,
**characterized in that** the shape of the air deflector is triangular, with the inner side portion (14) and the rear wing portion (15) united.

11. Air deflector according to claim 10, **characterized in that** the united inner side portion (14) and rear wing portion (15) form a continuous convex shape.

12. Air deflector according to any of the preceding claims,
**characterized in that** the wing shape of the rear wing portion (15) extends into the inner side portion (14).

13. Vehicle, comprising at least one air deflector according to any of claims 1 to 12.

14. Vehicle according to claim 13, **characterized in that** the vehicle comprises a sensor that indicates that the air deflector is attached to the vehicle.

15. Vehicle according to claim 13 or 14, **characterized in that** the vehicle comprises a function that disables the raising of the retractable top when an air deflector is attached to the vehicle.

## Patentansprüche

1. Luftablenker (1), der am oberen Windschutzscheibenquerträger (7) eines Cabrio-Fahrzeugs (2) angebracht werden kann, umfassend: eine Dachfläche (16), die einen vorderen Abschnitt (12), einen äußeren Seitenabschnitt (13), einen inneren Seitenabschnitt (14) und einen hinteren Flügelabschnitt (15) aufweist, wobei sich der hintere Flügelabschnitt (15) von der Dachfläche (16) nach oben erstreckt, **dadurch gekennzeichnet, dass** der Luftablenker eine Verriegelungsvorrichtung (11),umfasst, die den Luftablenker in der Verriegelungsanordnung (10) für das einziehbare Dach verriegeln kann.

2. Luftablenker gemäß Anspruch 1, **dadurch gekennzeichnet, dass** sich der äußere Seitenabschnitt (13) von der Dachfläche (15) nach unten erstreckt.

3. Luftablenker gemäß Anspruch 1 oder 2, **dadurch gekennzeichnet, dass** die Dachfläche (15) konvex ist.

4. Luftablenker gemäß einem der vorangegangenen Ansprüche, **dadurch gekennzeichnet, dass** der Luftablenker aus einem Plastikmaterial hergestellt ist.

5. Luftablenker gemäß einem der vorangegangenen Ansprüche, **dadurch gekennzeichnet, dass** der vordere Abschnitt (12) und der hintere Flügelabschnitt (15) durch eine Vielzahl von Streben (31) miteinander verbunden sind.

6. Luftablenker gemäß Anspruch 5, **dadurch gekennzeichnet, dass** die Streben (31) zusammenklappbar sind.

7. Luftablenker gemäß Anspruch 5 oder 6, **dadurch gekennzeichnet, dass** der Mittenabschnitt (30) zwischen dem vorderen Abschnitt (12) und dem hinteren Flügelabschnitt (15) aus einem flexiblen Material besteht.

8. Luftablenker gemäß Anspruch 7, **dadurch gekennzeichnet, dass** das flexible Material ein Gewebe ist.

9. Luftablenker gemäß einem der vorangegangenen Ansprüche, **dadurch gekennzeichnet, dass** die Gestalt des Luftablenkers im Wesentlichen rechtwinklig ist.

10. Luftablenker gemäß einem der Ansprüche 1 bis 8, **dadurch gekennzeichnet, dass** die Gestalt des Luftablenkers dreieckig ist, wobei der innere Seitenabschnitt (14) und der hintere Flügelabschnitt (15) vereint sind.

11. Luftablenker gemäß Anspruch 10, **dadurch gekennzeichnet, dass** der vereinte innere Seitenabschnitt (14) und hintere Flügelabschnitt (15) eine kontinuierlich-konvexe Gestalt ausbilden.

12. Luftablenker gemäß einem der vorangegangenen Ansprüche, **dadurch gekennzeichnet, dass** sich die Flügelgestalt des hinteren Flügelabschnitts (15) in den inneren Seitenabschnitt (14) erstreckt.

13. Fahrzeug, umfassend zumindest einen Luftablenker gemäß einem der Ansprüche 1 bis 12.

14. Fahrzeug gemäß Anspruch 13, **dadurch gekennzeichnet, dass** das Fahrzeug einen Sensor umfasst, der anzeigt, dass der Luftablenker am Fahrzeug angebracht ist.

15. Fahrzeug gemäß Anspruch 13 oder 14, **dadurch gekennzeichnet, dass** das Fahrzeug eine Funktion umfasst, welche das Anheben des einziehbaren Dachs außer Kraft setzt, wenn ein Luftablenker am Fahrzeug angebracht ist.

## Revendications

1. Déflecteur d'air (1), adapté pour être fixé sur la poutre transversale supérieure de pare-brise (7) d'un véhicule convertible (2), comprenant une surface supérieure (16) ayant une partie avant (12), une partie latérale extérieure (13), une partie latérale intérieure (14) et une partie d'aileron arrière (15), la partie d'aileron arrière (15) s'étendant vers le haut à partir de la surface supérieure (16), **caractérisé en ce que** le déflecteur d'air comprend un dispositif de verrouillage (11) adapté pour verrouiller le déflecteur d'air dans l'agencement de verrouillage (10) pour le dessus rétractable.

2. Déflecteur d'air selon la revendication 1, **caractérisé en ce que** la partie latérale extérieure (13) s'étend vers le bas depuis la surface supérieure (15).

3. Détecteur d'air selon la revendication 1 ou 2, **caractérisé en ce que** la surface supérieure (15) est convexe.

4. Déflecteur d'air selon l'une quelconque des revendications précédentes, **caractérisé en ce que** le déflecteur d'air est réalisé en matières plastiques.

5. Déflecteur d'air selon l'une quelconque des revendications précédentes, **caractérisé en ce que** la partie avant (12) et la partie d'aileron arrière (15) sont reliées l'une à l'autre par une pluralité d'entretoises.

6. Déflecteur d'air selon la revendication 5, **caractérisé en ce que** les entretoises (31) sont pliables.

7. Déflecteur d'air selon la revendication 5 ou 6, **caractérisé en ce que** la partie médiane (30) située entre la partie avant (12) et la partie d'aileron arrière (15) sont constituées d'un matériau souple.

8. Déflecteur d'air selon la revendication 7, **caractérisé en ce que** le matériau souple est un tissu tissé.

9. Déflecteur d'air selon l'une quelconque des revendications précédentes, **caractérisé en ce que** la forme du déflecteur d'air est sensiblement rectangulaire.

10. Déflecteur d'air selon l'une quelconque des revendications 1 à 8, **caractérisé en ce que** la forme du déflecteur d'air est triangulaire, la partie latérale intérieure (14) et la partie d'aileron arrière (15) étant unifiées.

11. Déflecteur d'air selon la revendication 10, **caractérisé en ce que** la partie latérale intérieure (14) et la partie d'aileron arrière (15) unifiées forment une forme convexe continue.

12. Déflecteur d'air selon l'une quelconque des revendications précédentes, **caractérisé en ce que** la forme d'aileron de la partie d'aileron arrière (15) s'étend jusque dans la partie latérale intérieure (14).

13. Véhicule comprenant au moins un déflecteur d'air selon l'une quelconque des revendications 1 à 12.

14. Véhicule selon la revendication 13, **caractérisé en ce que** le véhicule comprend un capteur qui indique que le déflecteur d'air est fixé sur le véhicule.

15. Véhicule selon la revendication 13 ou 14, **caractérisé en ce que** le véhicule comprend une fonction qui interrompit une élévation du dessus rétractable lorsque le déflecteur d'air est fixé sur le véhicule.
